**Europäisches Patentamt**

**European Patent Office**

**Office européen des brevets**

(19)

(11) Veröffentlichungsnummer : **0 386 035 B1**

## EUROPÄISCHE PATENTSCHRIFT

(12)

(45) Veröffentlichungstag der Patentschrift :
27.05.92 Patentblatt 92/22

(51) Int. Cl.$^5$ : **G01P 21/00, B60R 21/00**

(21) Anmeldenummer : **88909085.8**

(22) Anmeldetag : **20.10.88**

(86) Internationale Anmeldenummer :
**PCT/EP88/00943**

(87) Internationale Veröffentlichungsnummer :
**WO 89/03999 05.05.89 Gazette 89/10**

(54) **EINRICHTUNG ZUR FUNKTIONSKONTROLLE VON BESCHLEUNIGUNGSSENSOREN.**

(30) Priorität : **27.10.87 DE 3736294**

(43) Veröffentlichungstag der Anmeldung :
**12.09.90 Patentblatt 90/37**

(45) Bekanntmachung des Hinweises auf die
Patenterteilung :
**27.05.92 Patentblatt 92/22**

(84) Benannte Vertragsstaaten :
**AT BE CH DE FR GB IT LI LU NL SE**

(56) Entgegenhaltungen :
**WO-A-88/06541**
**US-A- 3 120 622**
**US-A- 3 830 091**
**US-A- 3 870 894**
**US-A- 4 495 433**
**Automobiltechnische Zeitschrift 84 (1982);**
**Nr.2; S.77-83**

(73) Patentinhaber : **Messerschmitt-Bölkow-Blohm**
**Gesellschaft mit beschränkter Haftung**
**Robert-Koch-Strasse**
**W-8012 Ottobrunn (DE)**

(72) Erfinder : **SPIES, Hans**
**Schiessstätte 12**
**W-8068 Pfaffenhofen (DE)**
Erfinder : **LAUCHT, Dr. Horst**
**Hermann-Löns-Weg 16**
**W-8206 Bruckmühl (DE)**
Erfinder : **HORA, Peter**
**Arnbachstr. 57**
**W-8898 Schrobenhausen (DE)**
Erfinder : **WÖHRL, Alfons**
**Seb.-Kneipp-Str. 13**
**W-8898 Schrobenhausen (DE)**

## Beschreibung

Die Erfindung bezieht sich auf eine Einrichtung zur Funktionskontrolle von Beschleunigungssensoren wie piezoelektrischen, magnetostriktiven, elektrodynamischen, kapazitiven oder piezoresistiven von denen einer als Meßsensor dient und in einer Auslöseschaltung enthalten ist, die einen Teil einer passiven Sicherheitseinrichtung zum Schutz der Insassen von Kraftfahrzeugen bildet.

Die DE 37 06 765 Al veröffentlicht am 15.09.1988, beschreibt einen von der Anmelderin entwickelten Aufprallsensor für ein Fahrzeug, der in einem Sensorgehäuse angeordnet ist und bei einem Aufprall des Fahrzeugs auf ein Hindernis zum Auslösen einer passiven Sicherheitseinrichtung dient, z.B. zum Aufblasen eines Luftkissens oder zum Strammziehen eines Sicherheitsgurtes etc. Dieser Aufprallsensor weist im Sensorgehäuse einen piezoempfindlichen Beschleunigungsfühler, eine Auswerteschaltung für dessen Ausgangssignale, eine Auslöseschaltung zum Auslösen der Sicherheitseinrichtung sowie eine Prüfschaltung zur Überprüfung seiner Funktionstüchtigkeit auf. Während des Prüfvorganges ist die Auslöseschaltung von der Sicherheitseinrichtung getrennt. Als Teil der Prüfschaltung ist im Sensorgehäuse ein elektroakustischer oder elektromechanischer Wandler angeordnet, der mit dem piezoelektrischen Beschleunigungsfühler akustisch oder mechanisch gekoppelt ist.

Durch die DE 22 07 831 Al ist ein Aufprallsensor bekannt geworden, der mit einer Prüfschaltung für die Funktionstüchtigkeit des Aufprallsensors versehen ist, mit der ein Impulszug erzeugt wird, wobei dessen Impulsamplituden so bemessen sind, daß vorgegebene Schwellwerte überprüft werden können.

Auf diesem Stand der Technik baut die vorliegende Erfindung auf. Ihr liegt die Aufgabe zugrunde, eine Einrichtung der eingangs genannten Art zu schaffen, mit der z.B. piezoelektrische Aufnehmer in noch einfacherer und raumsparender Weise gegenseitig geprüft werden können und zwar ohne daß die Auslöseschaltung - wie beim Stand der Technik - von der Sicherheitseinrichtung getrennt werden muß.

Diese Aufgabe wird durch die im Anspruch 1 aufgezeigten Maßnahmen gelöst. In weiteren Ansprüchen sind Aus- und Weiterbildungen der Erfindung angegeben. So kann alternativ zum Anspruch 1 eine Einrichtung gem. Anspruch 5 darin bestehen, daß daß zwei Beschleunigungssensoren (10, 10′) in einem Winkel von 90° zueinander auf einem Träger (20b) montiert und in einem Gehäuse (60) angeordnet sind und ein Körperschallsender (50) in der Winkelhalbierenden zu diesen beiden Sensoren (10, 10′) angeordnet ist, sodaß die Signale von beiden Sensoren empfangen und über einen Prozessor (11) im Hinblick auf Funktion, Eichung und Ankopplung an die Gehäusestruktur (60) überprüft werden, wobei während der Prüfung die Auslöseschaltung von der Sicherheitseinrichtung nicht elektrisch getrennt ist, sondern aktivbleibt. Weiterhin kann eine Einrichtung nach Anspruch 5 dadurch ausgestaltet sein, daß die Beschleunigungsaufnehmer (10) unter anderen Winkeln als 90° angeordnet sind.

Ebenso kann eine Einrichtung nach Anspruch 5 dadurch abgeändert sein, daß die Anordnung in drei Koordinaten wirkend gestaltet ist.

Die erfindungsgemäße Einrichtung kann auch so gestaltet sein, daß die Aufnehmeranordnung in ihrer Resonanzfrequenz geprüft wird und die Resonanzfrequenz über der zu verarbeitenden Signalfrequenz liegt.

Ferner kann die Einrichtung so gestaltet sein, daß zur Kontrolle der Aufnehmerfunktion mit einem Prüfspannungsimpuls die Pulsdauer so klein gewählt ist, daß in der nachgeschalteten Signalverarbeitung kein wesentlicher Fehler verursacht wird.

In der nachfolgenden Beschreibung sind Ausführungsbeispiele erläutert sowie in den Figuren der Zeichnung skizziert. Es zeigen:

Fig. 1 ein Blockschaltbild für ein Ausführungsbeispiel, das einmal die Kontrolle der Resonanzfrequenz ermöglicht und zum andermal die Kontrolle der Reaktion auf einen Prüfspannungsimpuls am Beschleunigungsaufnehmeranschluß Low-BA,

Fig. 2 ein Blockschaltbild der Einrichtung zur Funktionskontrolle von Beschleunigungsaufnehmern in einem weiteren Ausführungsbeispiel mit der Auslöseschaltung der Sicherheitseinrichtung,

Fig. 3 ein Schemabild eines elementemäßigen Aufbaus der Einrichtung zur Funktionskontrolle von Beschleunigungsaufnehmern in einem Ausführungsbeispiel,

Fig. 4 ein Schemabild eines Aufbaus der Einrichtung alternativ zu Fig.3,

Fig. 5 ein Schemabild eines Aufbaus alternativ zu Fig. 3 oder 4.

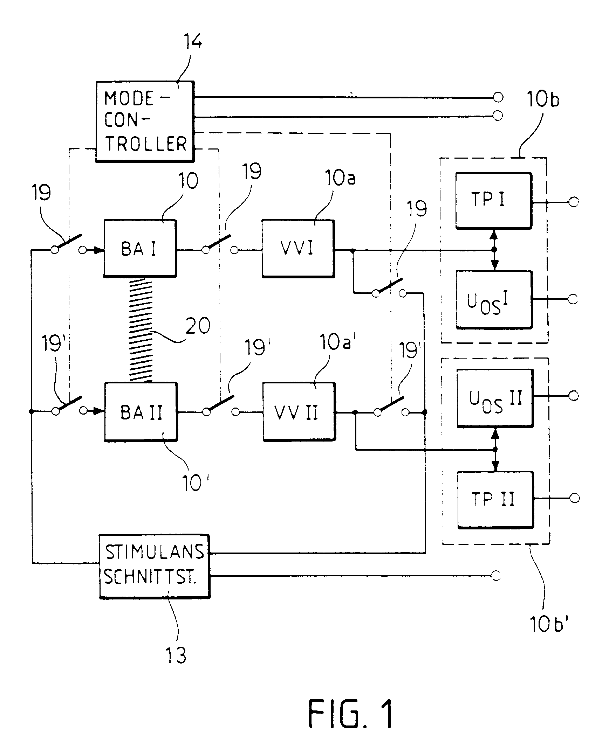

Durch die in den Figuren 1 bis 5 skizzierten Ausführungsbeispiele einer Einrichtung zur Funktionskontrolle von Beschleunigungsaufnehmern in sogenannten Aufprallsensoren für Kraftfahrzeuge zur Auslösung einer passiven Sicherheitseinrichtung für den Insassenschutz, ist eine echte Funktionsprüfung für die gesamte Signalkette geschaffen worden, vornehmlich jedoch eine gegenseitige Funktionsprüfung der Beschleunigungsaufnehmer 10, 10′ im Hinblick auf die Empfindlichkeit, die Bandbreite und die Resonanzfrequenz. Dies ist ermöglicht worden aufgrund der mechanischen Ankopplung der Beschleunigungsaufnehmer 10, 10′ gegenseitig zueinander und zum Gehäuse 20b und führt zur Einsparung von mindestens einem oder allen bisher erforderlichen Aktuatoren.

Der in der Figur 1 skizzierte Aufbau einer Prüfschaltung erlaubt zwei Prüf- bzw. Kontrollmöglichkeiten, nämlich einmal die Kontrolle der Resonanzfrequenz und zum andernmal die Kontrolle der Reaktion auf einen Prüfspannungsimpuls am sogenannten Low-Beschleunigungsaufnehmeranschluß 10 oder 10'. Der oder die Beschleunigungsaufnehmer 10, 10' (BA I, BA II) werden durch elektrische Anregung aus der Stimulanzeinrichtung 13 so stimuliert, daß je nach Einstellung der Schalter 19, 19' durch den Modecontroller 14 einer der Beschleunigungsaufnehmer als Körperschallsender wirkt, dessen Signale über die Schaltelemente 10a, 10b bzw. 10a', 10b' geleitet werden und damit über die Auswertschaltung der andere Beschleunigungsaufnehmer in seiner Funktion, Eichung und Ankopplung an die Gehäusestruktur überprüft wird und trötz Prüfung aktiv bleibt.

In den eingangs zum Stand der Tecknik genannten Druckschriften und in der ATZ "Automobil Technische Zeitschrift" 84 (1982) Heft 2, Seiten 77 bis 83 geschieht die Überprüfung oder Kontrolle der Funktion erst wenn die Sicherheitseinrichtung von der Auslöseschaltung elektrisch getrennt ist, insbesondere mittels Schalter. Dagegen erfolgt bei der Erfindung die Prüfung bzw. Funktionskontrolle mit an der Sicherheitseinrichtung elektrisch angeschlossener Auslöseschaltung. Die Auslösefunktion ist also zu jedem Zeitpunkt voll aktiviert. Neben Vorteil ist - wie bereits erwähnt - der wietere Vorteil einer echten Funktionsprüfung für die gesamte Signalkette gegeben. Durch die Umkehrung des jeweiligen physikalischen Effektes nach Anspruch 2 in dem angeregten Beschleunigungssensor erfolgt die Umwandlung jeweils eines der Beschleunigungssensor 10 oder 10' in einen Körperschallsender. Dabei werden mit Hilfe von Schaltern 19 in den jeweiligen Prüfpfad die Vorverstärker I = 10a und II = 10a' eingeschaltet, sowie in 10b der Tiefpaß I und die oszillierende Spannung $U_{OSI}$ und bei 10b' der Tiefpaß TPII und die oszillierende Spannung $U_{OSII}$. Die Prüfspannung wird erzeugt an einem Prüfungsspannungsimpulsgenerator.

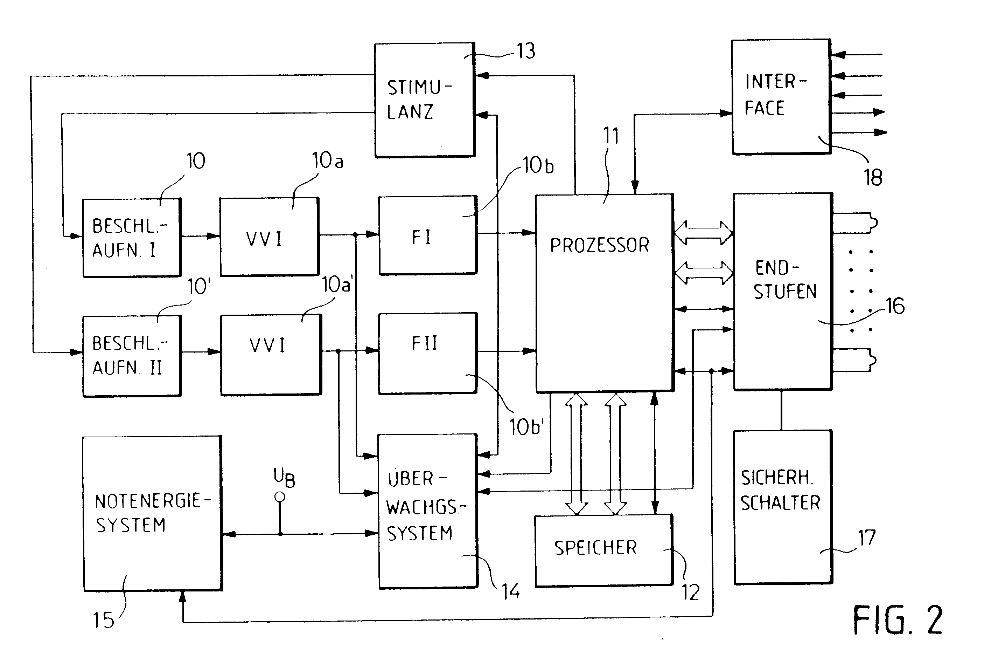

Den Beschleunigungsaufnehmern 10 und 10' ist auch im jeweiligen Pfad in Fig. 2 jeweils ein Vorverstärker VVI = 10a und VVII = 10a' nachgeordnet.

Anstelle der Tiefpaßfilter I und II sind in Fig. 2 Allgemein-Filter F1 und F2 für 10b und 10b' anwendbar, damit Funktion, Eichung und Ankopplung überprüft werden können.

Die Figur 2 zeigt das vorbeschriebene Ausführungsbeispiel der Einrichtung zur Funktionskontrolle von Beschleunigungsaufnehmer im Zusammenhang mit der Auslöseschaltung für die Sicherheitseinrichtung, also den sogenannten Aufprallsensor. Hier ist die Verknüpfung der Kontrolleinrichtung mit einem Prozessor 11, einem Überwachungssystem 14 und einem Notenergiesystem 15 skizziert, wobei dem Prozessor 11 ein Speicher 12, ein Interface 18 sowie die mit einem Sicherheitsschalter 17 versehenen Endstufen 16 zugeordnet sind.

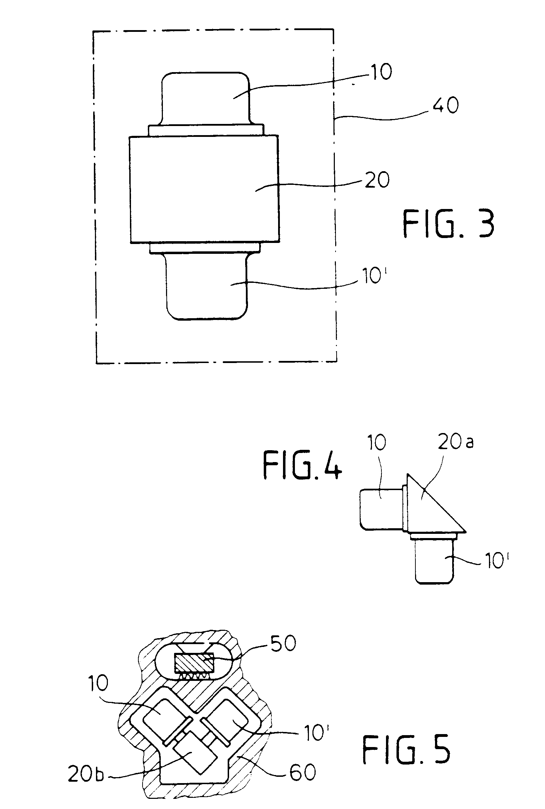

In den Figuren 3, 4 und 5 sind Ausführungsbeispiele des Aufbaus einer erfindungsgemäßen Einrichtung alternativ aufgezeigt. In Figur 3 ist ein Aluminium-Zylinder als Träger (20) der Beschleunigungsaufnehmer 10, 10' dargestellt. Dieser Träger (20) kann seinerseits wie Fig. 3 zeigt, mit einer Gehäusestruktur 40 verbunden sein. Der Träger kann auch ein Prisma sein (Fig. 4 dort 20a) oder ein Gehäuse mit 90°-Winke1 zur Aufnahme der Beschleunigungsaufnehmeranordnung (Fig. 5) - dort Platine 20b. Beim Ausführungsbeispiel nach Fig. 5 sind in einem Gehäuse 60 die beiden Beschleunigungsaufnehmer 10, 10' auf einem Träger 20b in einem rechten Winkel zueinander befestigt. Extern dieses Gehäuses 60 ist in der winkelhalbierenden ein Körperschallsender 50 angeordnet, der aufgrund seiner symmetrischen Lage zu den Beschleunigungsaufnehmern 10, 10' diese gleichmäßig mit Schall beaufschlagt und somit beide gleichzeitig auf ihre Funktiontüchtigkeit überprüft werden, ohne daß sie während des gesamten Prüfvorganges von der Sicherheitseinrichtung getrennt werden müssen. Die Beschallungsfrequenz liegt dabei über der zu verarbeitenden oberen Signalfrequenzgrenze. Die Ausführungen nach Fig. 4 und 5 sind funktional und raumsparend in der Bauweise.

Die Funktion der erfindungsgemäßen Prüfeinrichtung bezüglich der Signalaufbereitung der Beschleunigungssensoren und ihrer Signalverarbeitung ist an sich bekannt und beschrieben in dem vorgenannten Aufsatz ATZ "Automobil Technische Zeitschrift" 84 (1982) Heft 2, Fig. 10, Bild 12 und zugehörige Beschreibung insbesondere in den Ziffern 1.5, 1.5.1 und 1.5.2.

## Patentansprüche

1. Einrichtung zur Funktionskontrolle von Beschleunigungssensoren, wie piezoelektrischen, magnetostriktiven, elektrodynamischen, kapazitiven oder piezoresistiven, von denen einer als Meßsensor dient und in einer Auslöseschaltung enthalten ist, die einen Teil einer passiven Sicherheitseinrichtung zum Schutz der Insassen von Kraftfahrzeugen bildet, **dadurch gekennzeichnet,** daß mehrere Beschleunigungssensoren (10,10') derart miteinander mechanisch gekoppelt sind und durch elektrische Anregung so stimuliert werden, daß jeweils einer der Beschleunigungssensoren (10') bzw. Beschleunigungsaufnehmer (10) als Körperschallsender wirkt, dessen Signale der oder die anderen mit ihm gekoppelten Beschleunigungssensoren (10,10') empfangen, um

EP 0 386 035 B1

über einen Prozessor (11) im Hinblick auf Funktion, Eichung und Ankopplung an die Gehäusestruktur überprüft zu werden, wobei während der Prüfung die Auslöseschaltung mit der Sicherheitseinrichtung elektrisch verbunden und auslösebereit bleibt.

2. Einrichtung nach Anspruch 1, **dadurch gekennzeichnet,** daß durch Umkehrung des jeweiligen physikalischen Effektes in dem angeregten Beschleunigungssensor (10,10′) die Umwandlung desselben in einen Körperschallsender erfolgt.

3. Einrichtung nach Anspruch 1 oder 2, **dadurch gekennzeichnet,** daß als mechanisches Koppelelement (20) für die Beschleunigungsaufnehmer (10,10′) eine Konfiguration dient, an dessen beiden Stirnflächen je einer dieser Beschleunigungsaufnehmer angeordnet ist, von denen der eine - ein piezoelektrischer Beschleunigungsaufnehmer - mit einem Sinusgenerator (13) verbunden ist und der andere - ein beliebiger Beschleunigungsaufnehmer oder auch ein piezoelektrischer Beschleunigungsaufnehmer - mit der nachgeschalteten Nutz- und Kontrollsignalverarbeitung verknüpft ist.

4. Einrichtung nach den Ansprüchen 1 bis 3, **dadurch gekennzeichnet,** daß die Beschleunigungsaufnehmer (10,10′) auf einem der jeweiligen Anforderung angepaßten, z.B. L-förmigen oder prismatischen Träger (20a) angeordnet sind.

5. Einrichtung zur Funktionskontrolle von Beschleunigungssensoren wie piezoelektrischen, magnetostriktiven, elektrodynamischen, kapazitiven oder piezoresistiven, von denen einer als Meßsensor dient und in einer Auslöseschaltung enthalten ist, die einen Teil einer passiven Sicherheitseinrichtung zum Schutz der Insassen von Kraftfahrzeugen bilder, **dadurch gekennzeichnet,** daß zwei Beschleunigungssensoren (10, 10′) in einem Winkel von 90° zueinander auf einem Träger (20b) montiert und in einem Gehäuse (60) angeordnet sind und ein Körperschallsender (50) in der Winkelhalbierenden zu diesen beiden Sensoren (10, 10′) angeordnet ist, so daß Schall-Signale von beiden Sensoren empfangen und über einen Prozessor (11) im Hinblick auf Funktion, Eichung und Ankopplung an die Gehäusestruktur (60) überprüft werden, wobei während der Prüfung die Auslöseschaltung mit der Sicherheitseinrichtung elektrisch verbunden und auslösebereit bleibt.

6. Einrichtung nach Anspruch 5, **dadurch gekennzeichnet,** daß die Beschleunigungsaufnehmer (10,10′) unter anderen Winkeln angeordnet sind.

7. Einrichtung nach den Ansprüchen 5 und 6, **dadurch gekennzeichnet,** daß die Anordnung in drei Koordinaten wirkend gestaltet ist.

8. Einrichtung nach einem der vorhergehenden Ansprüchen 1 - 7, **dadurch gekennzeichnet,** daß die Aufnehmeranordnung in ihrer Resonanzfrequenz geprüft wird und die Resonanzfrequenz über der zu verarbeitenden Signalfrequenz liegt.

9. Einrichtung nach einem der Ansprüche 1 - 7, **dadurch gekennzeichnet,** daß zur Kontrolle der Aufnehmerfunktion mit einem Prüfspannungsimpuls die Pulsdauer so gering ist, daß in der nachgeschalteten Signalverarbeitung kein wesentlicher Fehler verursacht wird.

## Claims

1. Device for the operational control of acceleration sensors, such as piezoelectric, magnetostrictive, electrodynamic, capacitative or piezoresistive sensors, of which one serves as measuring sensor and is contained in a trigger circuit which is part of a passive safety device for the protection of passengers in motor vehicles, characterised in that several acceleration sensors (10) are mechanically coupled to each other and stimulated by electrical excitation in such a manner that one respective acceleration sensor or acceleration pickup (10) serves as body-sound transmitter the signals of which are received by the other acceleration sensor(s) (10) or those coupled therewith, so as to be tested via a processor (11) with respect to functioning, calibration and coupling to the housing structure, in which respect the trigger circuit remains electrically connected to the safety device and trigger-ready during the test.

2. Device according to claim 1, characterised in that its conversion into a body-sound transmitter is performed by reversal of the respective physical effect in the excited acceleration sensor (10).

3. Device according to claim 1 or 2, characterised in that the mechanical coupling element (20) for the acceleration pickup (10) is served by a configuration having a respective acceleration pickup arranged on both end surfaces, of which the one, which is a piezoelectrical acceleration pickup, is connected to a sine generator (31), and the other, which can be any type of acceleration pickup or a piezoelectrical acceleration pickup, is linked to a subsequent data and control-signal processor on the output side.

4. Device according to claims 1 to 3, characterised in that the acceleration pickups (10) are arranged on a support (20a) to suit the requirements, for example L-shaped or prismatic.

5. Device for operational control of acceleration sensors, such as piezoelectrical, magnetostrictive, electrodynamic, capacitive or piezoresistive sensors, of which one serves as measuring sensor and is contained in a trigger circuit which is part of a passive safety device for the protection of passengers in motor vehicles, characterised in that two acceleration sensors (10, 10') are mounted on a support (20b) at an angle of 90° relative to each other and arranged in a housing (60), and a body-sound transmitter (50) is arranged in the bisector angle relative to these two sensors (10, 10'), so that sound signals are received by both sensors and tested with respect to functioning, calibration and coupling to the housing structure (60), in which respect the trigger circuit remains electrically connected to the safety device during the test and remains trigger-ready.

6. Device according to claim 5, characterised in that the acceleration pickups (10, 10') are arranged at different angles.

7. Device according to claims 5 and 6, characterised in that the arrangement is effective in three coordinates.

8. Device according to one of the above claims 1 to 7, characterised in that the pickup arrangement is tested in its resonance frequency, and that the resonance frequency is above the signal frequency to be processed.

9. Device according to one of claims 1 to 7, characterised in that the pulse duration for checking the pickup function by means of a test voltage pulse is so short that no significant fault is caused in signal processing at the output side.


## Revendications

1. Dispositif pour le contrôle du fonctionnement de capteurs d'accélération, tels que des capteurs piézo-électriques, magnétostrictifs, électrodynamiques, capacitifs ou piézo-résistifs, parmi lesquels l'un des capteurs est utilisé comme capteur de mesure et est intégré dans un circuit de déclenchement qui constitue une partie d'un dispositif de sécurité passive pour la protection des passagers d'un véhicule automobile, caractérisé en ce que plusieurs capteurs d'accélération (10) sont couplés mécaniquement entre eux et sont stimulés par excitation électrique de manière telle que, chaque fois, l'un des capteurs d'accélération (10) agit comme générateur de bruit de structure dont les signaux sont reçus par le ou les capteurs d'accélération (10) couplé(s) avec celui-ci afin de contrôler à l'aide d'un processeur (11) le fonctionnement, l'étalonnage et le couplage au boîtier, le circuit de déclenchement restant lié électriquement au dispositif de sécurité et restant prêt au déclenchement pendant le processus de contrôle.

2. Dispositif selon la revendication 1, caractérisé en ce que, par inversion de l'effet physique concerné dans le capteur d'accélération (10) excité, on transforme celui-ci en générateur de bruit de structure.

3. Dispositif selon la revendication 1 ou 2, caractérisé en ce qu'il utilise comme élément de couplage mécanique (20) pour les capteurs d'accélération (10) un agencement sur les deux faces frontales duquel est monté chaque fois l'un desdits capteurs d'accélération, parmi lesquels l'un - un capteur d'accélération piézo-électrique - est relié à un générateur d'ondes sinusoïdales (31) et l'autre - un capteur d'accélération quelconque ou également un capteur d'accélération piézoélectrique - est relié au circuit de traitement du signal actif et du signal de contrôle.

4. Dispositif selon les revendication 1 à 3, caractérisé en ce que les capteurs d'accélération (10) sont montés sur un support (20a) par exemple en forme de L ou prismatique adapté aux conditions rencontrées.

5. Dispositif pour le contrôle du fonctionnement de capteurs d'accélération, tels que des capteurs piézo-électriques, magnétostrictifs, électrodynamiques, capacitifs ou piézo-résistifs, parmi lesquels l'un des capteurs sert de capteur de mesure et est intégré dans un circuit de déclenchement qui constitue une partie d'un dispositif de sécurité passive pour la protection des passagers d'un véhicule automobile, caractérisé en ce que deux capteurs d'accélérations (10, 10') sont montés sur un support (20b) en formant entre eux un angle de 90° et sont disposés dans un boîtier (60) et un générateur de bruit de structure (50) est disposé sur la bissectrice par rapport à ces deux capteurs (10, 10') de manière telle que les signaux sonores sont reçus par les deux capteurs et que le fonctionnement, l'étalonnage et le couplage avec le boîtier (60) sont contrôlés à l'aide d'un processeur (11), le circuit de déclenchement restant lié électriquement au dispositif de sécurité et restant prêt au déclenchement pendant le processus de contrôle.

6. Dispositif selon la revendication 5, caractérisé en ce que les capteurs d'accélération (10, 10') sont disposés suivant des angles différents.

7. Dispositif selon les revendications 5 et 6, caractérisé en ce que l'agencement de capteurs est actif suivant trois axes.

8. Dispositif selon l'une des revendications 1 à 7 précédentes, caractérisé en ce que la fréquence de résonance de l'agencement de capteurs est contrôlée et la fréquence de résonance est supérieure à la fréquence du signal à traiter.

9. Dispositif selon l'une des revendications 1 à 7 précédentes, caractérisé en ce que, pour le contrôle du fonctionnement des capteurs à l'aide d'une impulsion de tension de contrôle, la durée de l'impulsion est suffisamment courte pour ne pas entraîner d'erreur sensible lors du traitement du signal ultérieur.

FIG. 1

EP 0 386 035 B1

FIG. 2

FIG. 3

FIG.4

FIG. 5